# EUROPEAN PATENT SPECIFICATION

(11) **EP 1 819 459 B1**
(45) Date of publication and mention of the grant of the patent: **21.01.2009**
(21) Application number: 05806686.1
(22) Date of filing: 14.11.2005
(51) Int. Cl.: B21D 51/22, A47J 27/00

(54) **METHOD FOR OBTAINING A HOLLOW MONOLITHIC ALUMINUM- ALLOY ELEMENT WITH HANDLES**
VERFAHREN ZUM ERHALT EINES HOHLEN MONOLITHISCHEN ALUMINIUMLEGIERUNGSELEMENTS MIT GRIFFEN
PROCEDE DE PRODUCTION D'UN ELEMENT MONOLITHIQUE CREUX, CONSTITUE D'UN ALLIAGE D'ALUMINIUM ET COMPORTANT DES POIGNEES

(30) Priority: 18.11.2004 IT MN20040032
(43) Date of publication of application: 22.08.2007
(73) Proprietor: Attrezzeria M.V. Di Marin Visino E C. S.N.C., I-26041 Casalmaggiore (IT)
(72) Inventor: MARIN, Visino, I-26041 Casalmaggiore (IT)
(74) Representative: Alagem Modiano, Lara S.
(86) International application number: PCT/EP2005/012174
(87) International publication number: WO 2006/053696

(56) References cited:
- EP-A- 0 511 938
- DE-U1- 29 904 588
- FR-A- 1 001 283
- FR-A- 2 451 181
- US-A- 4 491 235

## Description

### Technical Field

The present invention relates to a method for obtaining a hollow monolithic aluminum-alloy element with handles.

### Background Art

The great diffusion of aluminum-alloy containers for cooking is known; these containers must have grip handles so that they can be handled by users, and the same applies of course for the lids meant to cover said containers.

Containers with corresponding lids are currently commercially available in which the handles protrude monolithically at a certain distance from the top of the wall of said containers, and Italian patent application MN2003A000025 by the same Applicant indeed protects said containers and a method for obtaining them.

FR 1 001 283 discloses a method for obtaining a hollow monolithic aluminum-alloy element as described in the pre-characterizing portion of the appended claim 1.

Continuing research, however, has allowed to devise a method which the present invention seeks to protect.

### Disclosure of the Invention

The proposed aim is achieved by a method for obtaining a hollow monolithic aluminum-alloy element provided with handles according to the invention, comprising:
- a first step for drawing a suitable portion of flat metal plate, obtaining a pre-deformed element which resembles, as regards the bottom and wall, the shape of the finished element and has, at the top of the wall, a radially extending protrusion at the at least one handle to be obtained;
   characterized by
- a second step for coining the pre-deformed element provided in the first step, obtaining an element which has a portion of a wall
   which is comprised between the at least one handle and the top of said wall.

### Brief Description of the Drawings

Further characteristics and advantages of the present invention will become better apparent from the description of a preferred but not exclusive embodiment thereof, illustrated by way of non-limiting example in the accompanying drawings, wherein:
Figure 1 is a perspective view of a saucepan obtained with the method according to the invention;
Figures 2 and 3 are two sectional views, taken along mutually perpendicular planes, of the saucepan of Figure 1;
Figure 4 is a plan view of the initial portion of flat metal plate of the method;
Figure 5 is a series of views, derived from the central image according to the arrows indicated therein, of the pre-deformed element obtained after the drawing step;
Figure 6 is a view of the coining die in the open condition;
Figures 7 and 8 are two sectional views, taken along mutually perpendicular planes, of the coining die in the closed condition;
Figure 9 is a view of the saucepan together with the corresponding lid.

### Ways of carrying out the Invention

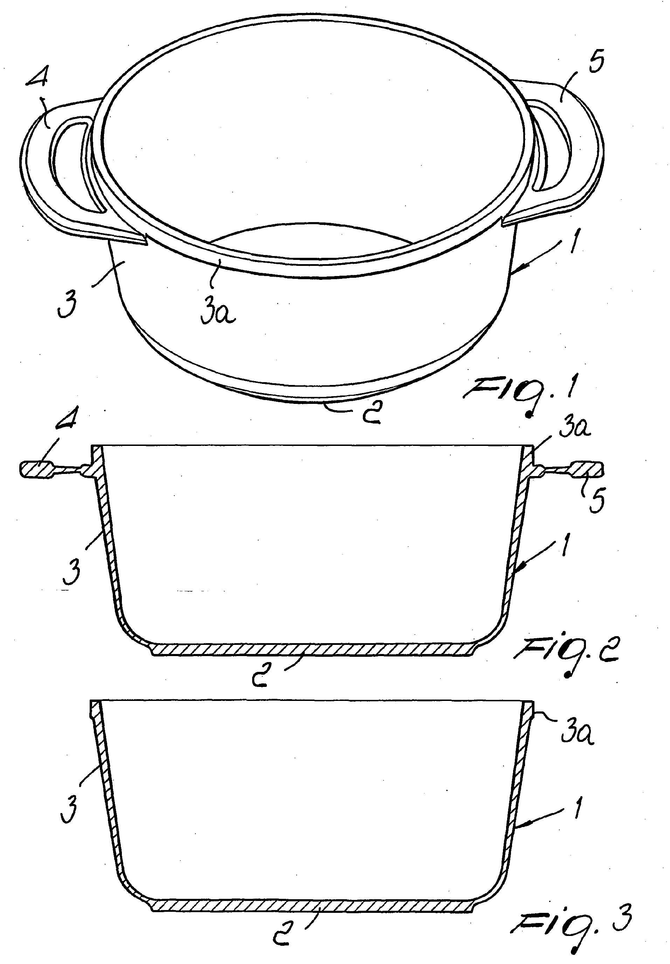

In Figures 1, 2 and 3, the reference numeral 1 designates a hollow monolithic element made of aluminum alloy which is shaped like a saucepan and comprises a bottom 2 and a wall 3; there are at least one and preferably two grip handles 4 and 5 which protrude monolithically from the wall 3 at a certain distance from the top, and the wall portion comprised between said handles and said top is shaped like a raised rim 3 a.

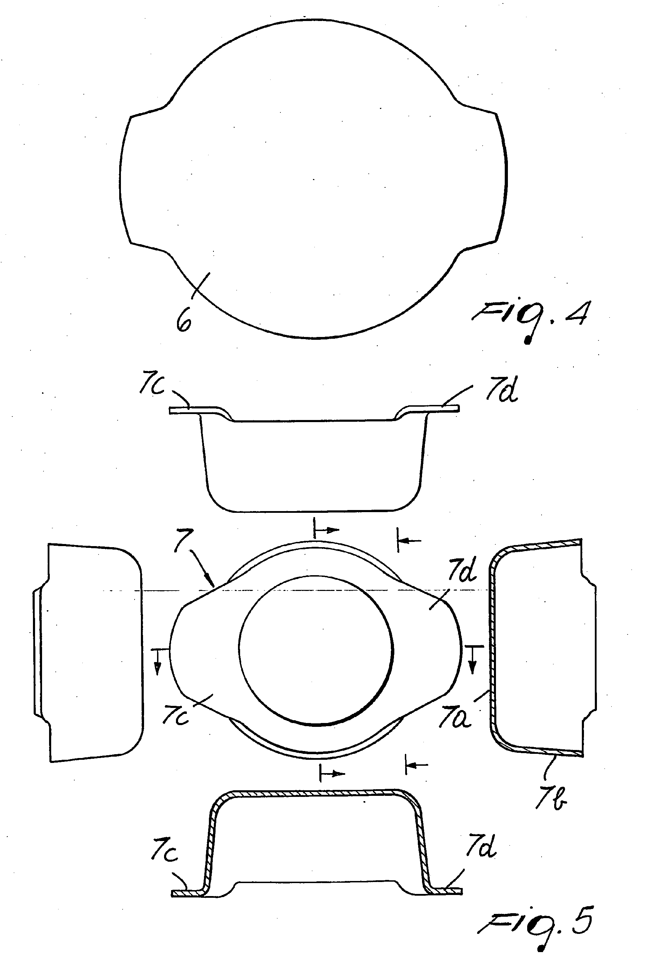

A method according to the invention for obtaining the saucepan described above starts from the portion of flat metal plate, which is appropriately pre-shaped and indicated by the reference numeral 6 in Figure 4.

In the first step of the method, the portion of metal plate 6 is subjected to drawing in a normal die, obtaining a pre-deformed element designated by the reference numeral 7 in Figure 5.

This element resembles, as regards the bottom 7a and the wall 7b, the shape of the saucepan 1, and has, at the top of the wall 7b, at least one and preferably two protrusions 7c and 7d at the at least one handle to be obtained.

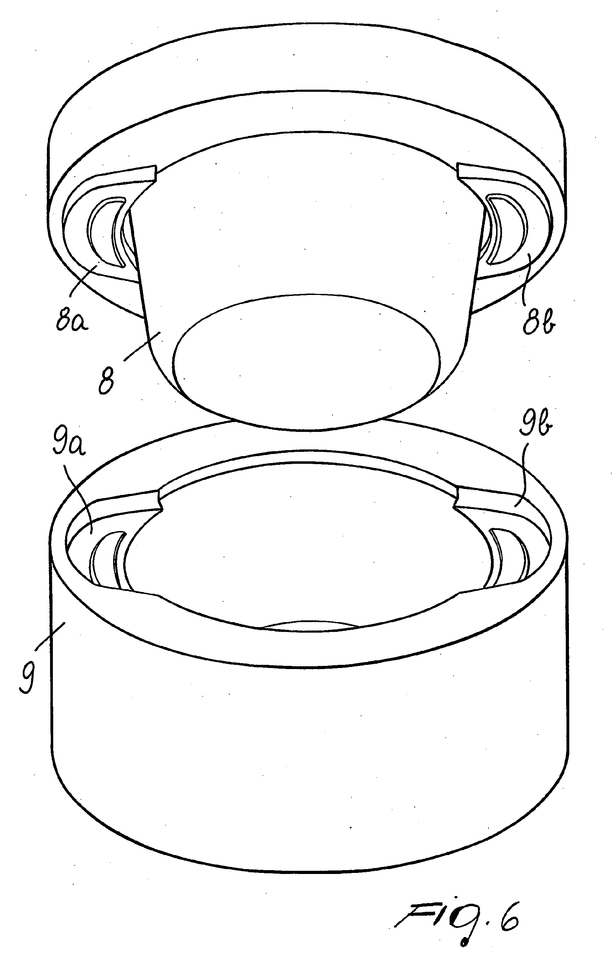

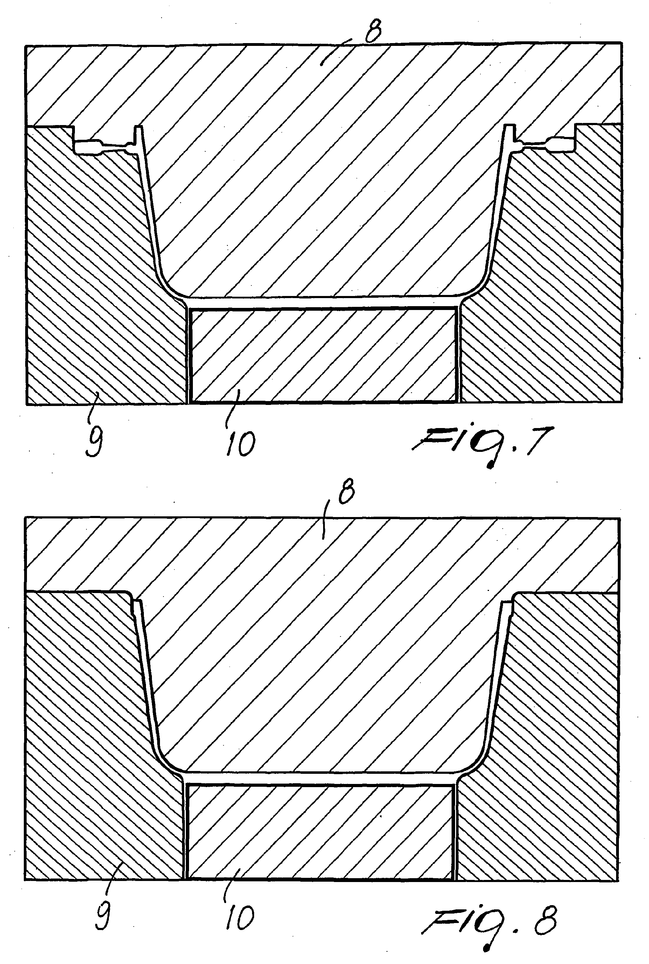

The pre-deformed element 7 is then inserted, during the second step of the method, in the coining die shown in Figures 6, 7 and 8, which comprises the male plug 8, the female part 9 and the disk 10, according to an obvious arrangement which provides for the insertion of the protrusions 7c, 7d within the cavities 9a, 9b which are present in the female part 9 and are matched by the protrusions 8a, 8b provided in the male plug 8.

The coining performed in the described die produces the element designated by the reference numeral 1.

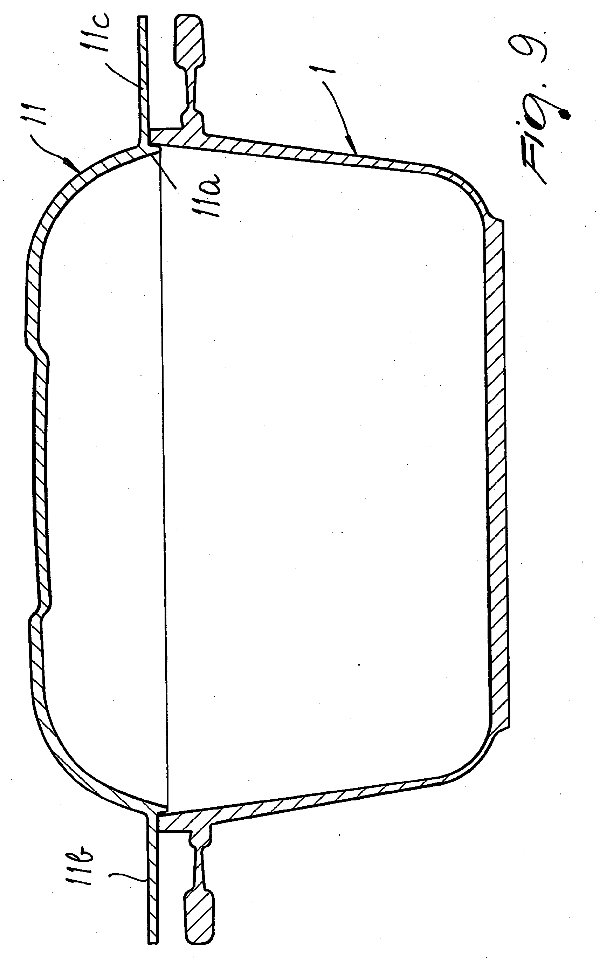

To complete what has been described above, attention is called in Figure 9 to the coupling between the saucepan 1 and the corresponding lid 11, which is also made with the method described above; the correctness of the mating is ensured by the reference border 11a according to which the wall portion comprised between the handles 11b, 11c and the top is configured.

The described invention is susceptible of numerous modifications and variations, all of which are within the scope of the appended claims; all the details may further be replaced with other technically equivalent elements.

## Claims

1. A method for obtaining a hollow monolithic aluminum-alloy element (1;11) provided with at least one handle (4,5;11b,11c), comprising:
- a first step of drawing a suitable portion of flat metal plate (6), obtaining a pre-deformed element (7) which resembles, as regards the bottom (7a) and wall (7b), the shape of the finished element (1;11) and has, at the top of the wall (7b), a radially extending protrusion (7c,7d) at the at least one handle (4,5;11b,11c) to be obtained;
**characterized by**
- a second step of coining the pre-deformed element (7) provided in the first step, obtaining an element (1:11) which has a portion (3a;11a) of a wall (3) which is comprised between the at least one handle (4,5;11b,11c) and the top of said wall (3).

2. The method according to claim 1, **characterized in that** the portion of flat metal plate (6) that is subjected to drawing is pre-shaped.

3. The method according to one of the preceding claims, **characterized by** providing the portion of wall (3) which is comprised between the at least one handle (4,5) and the top in the shape of a raised rim (3a).

4. The method according to one of the preceding claims, **characterized by** providing the wall portion comprised between the at least one handle (11b,11c) and the top in the shape of a border (11a) for reference in the coupling of said element (11) to a complementarily shaped element (1).

## Patentansprüche

1. Verfahren zum Erzeugen eines hohlen monolithischen Aluminiumlegierungselementes (1; 11), das mit zumindest einem Handgriff (4, 5; 11b, 11c) versehen ist, mit:
- einem ersten Schritt zum Ziehen eines geeigneten Teiles aus einer flachen Metallplatte (6), um ein vorverformtes Element (7) zu erhalten, welches hinsichtlich des Bodens (7a) und der Wand (7b) der Gestalt des fertigen Elementes (1; 11) ähnelt, und an der Oberseite der Wand (7b) einen sich radial erstreckenden Vorsprung (7c, 7d) an der Stelle des zumindest einen zu erzeugenden Handgriffes (4, 5; 11b, 11c) aufweist;
**gekennzeichnet durch**
- einen zweiten Schritt zum Prägen des vorverformten Elementes (7), das in dem ersten Schritt geschaffen wurde, zur Erzielung eines Elementes (1; 11), das einen Teil (3a; 11a) einer Wand (3) zwischen dem zumindest einen Handgriff (4, 5; 11b, 11c) und der Oberseite der Wand (3) umfaßt.

2. Verfahren nach Anspruch 1, **dadurch gekennzeichnet, daß** der Teil der flachen Metallplatte (6), der dem Ziehen unterworfen wird, vorgeformt ist.

3. Verfahren nach einem der vorhergehenden Ansprüche, **dadurch gekennzeichnet, daß** der Teil der Wand (3), der zwischen dem zumindest einen Handgriff (4, 5) und der Oberseite vorgesehen ist, die Gestalt eines erhabenen Randes (3a) hat.

4. Verfahren nach einem der vorhergehenden Ansprüche, **dadurch gekennzeichnet, daß** der Wandteil, der zwischen dem zumindest einen Handgriff (11b, 11c) und der Oberseite vorgesehen ist, die Gestalt eines Randes (11a) zum Kuppeln des Elementes (11) mit einem komplementär geformten Element (1) aufweist.

## Revendications

1. Procédé d'obtention d'un élément à base d'un alliage d'aluminium monolithique creux (1 ; 11) doté d'au moins une poignée (4 ; 5 ; 11b, 11c), comprenant :
- une première étape consistant à étirer une partie appropriée d'une plaque métallique plate (6), pour obtenir un élément pré-déformé (7) qui ressemble, en ce qui concerne le fond (7a) et la paroi (7b), à la forme de l'élément fini (1 ; 11) et présente au niveau du sommet de la paroi (7b), une protubérance s'étendant radialement (7c, 7d) au niveau de la
- au moins une poignée (4, 5 ; 11b, 11c) à obtenir ;
**caractérisé par**
- une seconde étape consistant à dresser l'élément pré-déformé (7) fourni dans la première étape pour obtenir un élément (1 ; 11) qui a une partie (3a ; 11a) de la paroi (3) qui est comprise entre la au moins une poignée (4, 5 ; 11b, 11c) et le sommet de ladite paroi (3).

2. Procédé selon la revendication 1, **caractérisé en ce que** la partie de la plaque métallique plate (6) qui est soumise à l'étirage est préformée.

3. Procédé selon l'une des revendications précédentes, **caractérisé en ce que** l'on prévoit la partie de paroi (3) qui est comprise entre la au moins une poignée (4, 5) et le sommet sous la forme d'un bord surélevé (3a).

4. Procédé selon l'une des revendications précédentes, **caractérisé en ce que** l'on prévoit la partie de paroi comprise entre la au moins une poignée (11b, 11c) et le sommet sous la forme d'une bordure (11a) pour référence dans l'accouplement dudit élément (11) à un élément formé de manière complémentaire (1).
